# EUROPEAN PATENT APPLICATION

(11) **EP 2 878 730 A1**
(43) Date of publication of application: **03.06.2015**
(21) Application number: 13005552.8
(22) Date of filing: 28.11.2013
(51) Int. Cl.: D06M 13/288, D06M 13/358, D06M 15/423, D06M 15/564, D21H 21/34, C09K 21/12

(54) **Method to provide flame retardancy to materials**

(71) Applicant: Archroma IP GmbH, 4153 Reinach (CH)
(72) Inventor: Sigmund, Harald, 79588 Efringen-Kirchen (DE); Baier, Hans-Dieter, 79686 Hasel (DE); Schuhmann, Michael, 79639 Grenzach-Wyhlen (DE)
(74) Representative: Ricker, Mathias

(57) **Abstract**

The present invention relates to a method of treating a material comprising the following steps: a) contacting a material with at least one phosphorus source, and b) subjecting the material obtained in step a) to a rinsing procedure, wherein the rinsing procedure comprises at least one rinsing step in which said material obtained in step a) is contacted with a nitrogen source, preferably a polymeric nitrogen source, more preferably a cationic polymeric nitrogen source.

## Description

### FIELD OF THE INVENTION

The invention relates to a method for providing flame retardant properties to a material by contacting the material with at least one phosphorus source and subjecting the obtained material to a rinsing procedure.

### BACKGROUND OF THE INVENTION

Flammable materials like cotton have to be treated with special chemicals in order to provide them with flame retardant properties. The type of chemicals employed as well as the techniques used to apply the chemicals to the material have a significant impact on the wash durability of the material's flame retardant properties. High wash durability is particularly important e.g. for work clothing in chemical or oil exploration industries. Suitable chemicals showing good wash durability are for example N-methylol-dimethylphosphonopropionamide (DMPPA) which may be additionally cross-linked with reactive melamine and/or glyoxal resins, or tetrakishydroxymethyl phosphonium chloride (THPC) or tetrakis hydroxymethyl phosphonium sulfate (THPS), which are both cross-linked using gaseous ammonia. These chemicals are usually applied onto the material, for example on cotton, in a continuous process under padding conditions. However, use of these chemicals goes hand in hand with certain drawbacks limiting the use of the materials provided with these chemicals: for example due to the presence of free formaldehyde in the material. Further, the processes used to apply the chemicals to the material may require process conditions that may damage the materials such as cellulose fibres.

A process known in the prior art comprises padding of a cotton substrate of preferably 180 to 320 gsm weight at room temperature with a mixture of a reactive organic phosphonate and a nitrogen-based cross-linking additive, preferably a reactive melamine resin, at a highly acidic pH. The obtained material is dried and subjected to discontinuous curing on a hotflue or stenter box followed by a strong alkaline final rinse required for neutralization and an oxidative treatment to reduce smell formation on the treated material.

Another example, EP 2 188 350 B describes the use of a phosphorous acid wherein the materials impregnated with this chemical show wash durable -flame retardancy without containing any formaldehyde.

By applying a nitrogen-rich chemical in a padding process step onto the material, the process known from EP 2 188 350 B is further modified. Such a process is known as Pekoflam^{®} ECO/SYN process by Archroma and described, for example, in Melliand International 2012, pages 122 - 124. This method comprises two steps, where in a first step a suitable phosphorous compound is applied to the material by using a typical impregnation application (e.g. Foulard padding) and a high temperature condensation step. In a second padding process step, the nitrogen-rich chemical is applied in order to achieve a wash-durable flame retardancy, which stays for 10 wash cycles or more at 60°C home laundry conditions.

Using the complete Pekoflam^{®} ECO/SYN procedure, materials based on cotton and selected blends with synthetics can be provided having flame retardant properties, which meet the requirements of multiple washings according to ISO 6330 2A. However, the wash durability of the flame retardant properties of the material is limited in case that the material is treated according to the standard procedure for industrial washes at 75°C, i.e. washed according to ISO 15797.

### OBJECTS OF THE INVENTION

It is therefore an object of the present invention to provide a material that has been treated to exhibit improved wash durability of the flame retardant properties.

### SUMMARY OF THE INVENTION

According to the present invention, the object is solved by providing a method of treating a material comprising the following steps: a) contacting a material with at least one phosphorus source, and b) subjecting the treated material obtained in step a) to a rinsing procedure, wherein the rinsing procedure comprises at least one rinsing step in which said material obtained in step a) is contacted with a nitrogen source, preferably polymeric nitrogen source, more preferably a cationic polymeric nitrogen source.

Preferably, the at least one phosphorus source is an inorganic phosphorus salt, in particular an inorganic phosphonate able to react with the material, preferably cotton. Further it is preferred that step a) is conducted at a pH of 5.0 to 8.0, preferably at a pH of 6.0 to 7.0. Preferably, the treatment of the material in step a) is conducted at ambient temperature, preferably at 20°C to 40°C. Preferably, prior to being subjected to step b), the treated material obtained according to step a) is subjected to at least one heat treatment step, preferably at least one drying and/or curing step.

Preferably, the at least one rinsing step of the rinsing procedure according to step b) is conducted at a temperature of between 20°C and 90°C, preferably between 40°C and 80°C, more preferably between 70°C and 80°C. Preferably, the load of nitrogen in the material after having been subjected to step b) is 1 to 10 weight%. Preferably, the at least one rinsing step is conducted at a pH below 8.0, preferably at a pH of 2.0 to 5.0.

Preferably, the material obtained in step b) is subjected to at least one further processing step, wherein the further processing step is selected from:
(1) treating the material obtained in step b) with a nitrogen source, preferably a polymeric nitrogen source, further preferably a cationic polymeric nitrogen source, wherein the nitrogen source may be the same or different from the nitrogen source used in step b),
(2) a heat treatment, preferably a drying step and/or a hot steam treatment, preferably at a temperature of 90°C to 170°C and/or a curing step, preferably at a temperature of 130°C to 160°C;
(3) a batch process where the treated material obtained in step b) is kept in wet stage for at least 1 min up to 24 hours, said batch process being preferably performed prior to a the heat treatment of (2), and
(4) an alkaline neutralization step, preferably at a pH of 11 to 14.

Preferably, the polymeric nitrogen source comprises reactive groups, preferably isocyanates-, epoxides-, chlorohydrin-, azetidinium- or triazin-based groups.

In a preferred embodiment, step a) and/or step b) is/are part of a process selected from the group comprising wet-in-wet process, dry-in-wet-process, continuous process, discontinuous process, process using a low liquor ratio, process using a high liquor ratio, or combinations thereof.

Preferably, the nitrogen source of step b) is applied to the material by spraying or coating. Preferably, the material is selected from a material which has already been subjected to the method according to the invention at least once. Preferably, the material comprises fibers, wherein the fibers consist essentially of or consist of cotton, preferably comprise at least 70%, more preferably 80%, further preferably 90%, still more preferably 100% cotton fibers, and wherein the residual non-cotton fibers are selected from wool, regenerated cellulose, or any other natural or synthetic fiber. Preferably, the material is a finished product, preferably a product which has been subjected to a dyeing step and/or a forming step, preferably a jacket or trousers.

The present invention further provides a material obtainable according to the method of treating a material described herein.

Furthermore, the present invention relates to the use of a material obtained by the method of the present invention for the manufacture of articles such as flame retardant industrial work-wear fabrics, protective underwear, adult and children nightwear, domestic and contract furnishings, mattress tickings and barrier fabrics, hospital and prison beddings, office and hotel furniture and curtains, table cloth and cooking aprons..

### DETAILED DESCRIPTION OF THE INVENTION

Surprisingly, the material treated with the method according to the invention, shows an unexpectedly high LOI (LOI = limited oxygen index) of preferably between 25 and 50, in particular between 30 and 40. Preferably, the material treated with the method according to the invention is selected from the group comprising: pure cotton fiber based fabrics which can achieve LOI of 35 to 50; cotton rich blends with aliphatic polyamide which can achieve LOI of 30 to 40; blends with polyester which can achieve LOI of 25 to 35; as well as blends with aromatic polyamides which can achieve LOI of 30 to 60.

The LOI (limited oxygen index) represents the percentage amount of oxygen in the atmosphere of the burning chamber which is just necessary that the sample starts to burn. Thus, the LOI is a measure for the flame retardant properties of a material. This method is described in DIN EN ISO 4589 part 2 for substances tested under room temperature conditions. The respective LOI for an untreated cotton is around 19. With state of the art processes like the Pyrovatex^{®} process (using DMPPA as chemical for providing flame retardant properties) or the Proban^{®} process (using THPX as chemical for providing flame retardant properties) LOI values in the range of 29 to 34 can be achieved depending on the effective load of the material, respectively the effective load of the fibers with the chemical used for providing the flame retardant properties. However, higher application dosages of the respective chemicals (e.g. DMPPA or THPX) lead to significant damage of the material structure and/or unacceptable handling properties of the material.

The term "material" as used herein means a material comprising fibers. Thus, a material in the sense of the present invention can be woven or non-woven. Terms like "fabric" or "textile" are used synonymously. The fibers are preferably cellulose-based. In a preferred embodiment, the fibers consist essentially of or consist of cotton-fibers. Non-cotton fibers can also be present which are selected from wool, regenerated cellulose, or any natural or synthetic fiber. Preferably, the material comprises or consists of at least 70%, more preferably 80%, further preferably 90% cotton-fibers, and wherein at most 30% (difference to 100%), preferably at most 20%, further preferably at most 10% are non-cotton fibers, which are selected from wool, regenerated cellulose, or any natural or synthetic fiber, or mixtures thereof. In a preferred embodiment, the material consists of 100% cotton fibers.

The material that has been provided with flame retardant properties may be subjected to at least one finishing step, preferably a dyeing step and/or a forming step to obtain a finished product. Alternatively, the at least one finishing step may be conducted prior to the material has been provided with flame retardant properties.

The finished product may be selected from, but is not limited to, the group of cloths for daily, normal use or working cloths, like underwear, trousers, jacket, overalls, gloves, masks and the like; carpets, textiles for seats, e.g. in airplanes or cars; and curtains, flame retardant industrial work-wear fabrics, protective underwear, adult and children nightwear, domestic and contract furnishings, mattress tickings and barrier fabrics, hospital and prison beddings, office and hotel furniture and curtains, table cloth and cooking aprons.

In a preferred embodiment, the material used in step a) of the method according to the invention has not yet been subjected to any treatment for providing flame retardant properties to the material or parts of the material, in particular the fibers. In particular, the material has yet not been contacted with any phosphorus source prior of being subjected to step a) of the method according to the invention. However, the material may have been subjected to pre-treatment steps with the aim to prepare a suitable starting material to be provided with flame retardant properties. For example, the material is preferably cleaned prior to treatment according to the present invention in order to remove dust and other undesirable particles or materials.

Preferably, the material used in step a) of the method according to the invention has already been subjected at least once to a treatment for providing flame retardant properties to the material or parts of the material, in particular the fibers. In particular, the material has been already subjected at least once to the method according to the invention; i.e. the material has preferably been subjected at least once to step a) and step b) of the method according to the invention. However, it is also possible that the material has already been subjected to another method which at least comprises contacting a material with at least one phosphorus source. For example, the material could have been subjected at least once to a Pekoflam^{®} ECO/SYN process as described in the prior art. Thus, in this embodiment of the invention, the flame retardant properties of the material can be regenerated. This is advantageous since it is cost effective for the customer who can regenerate the flame retardant properties of the material instead of being forced to buy new materials.

Alternatively, the material that has already been subjected to a treatment for providing the material with flame retardant properties according to the invention may only subjected to step b) of the method according to the invention. This further improves the cost efficiency of the overall treatment.

For example, if the nitrogen load of the material is 2 wt% or around 1.8 wt% - 2 wt%, respectively below 1.8 wt%, respectively below 1 wt% the material can be treated with the method according to the invention in order to re-establish the flame retardant properties of the material.

A material which has been treated with the method according to the invention at least once differs from a material which has not yet been treated with the method according to the invention in the load of nitrogen in the material, in particular in the fibers. Preferably, the material which has been treated with the method according to the invention at least once has a higher nitrogen load than the material which has not yet been treated with the method according to the invention. Preferably, the material which has been treated with the method according to the invention at least once, in particular after having been subjected to step b) at least once, has a nitrogen load of at least 1 wt%, preferably at least 2 wt%, more preferably at least 5 wt%, more preferably at least 7 wt%, most preferred between 1 to 10 wt%.

The term "nitrogen load" as used herein means the %share of nitrogen atoms in/on the material after having been subjected to step b). The nitrogen content is determined by elemental analysis of the material.

The at least one phosphorus source used in step a) is preferably designed as reactive phosphorus compound, in particular as inorganic phosphorus salt. Most preferably, the phosphorus source is an inorganic phosphonate. "Reactive phosphorus compound" herein means that the phosphorus compound, in particular an inorganic phosphonate, is capable of chemically reacting with the material, in particular with the hydroxyl groups of the cellulose-based fibers, in particular with the hydroxyl groups of the cotton fibres. Preferably, the chemical reaction leads to a formation of a cellulose phosphorus ester. For example, a suitable phosphorus source is sold under the trade name Pekoflam^{®} ECO by Archroma.

Generally, any suitable technique can be used to contact the material with the phosphorus source in step a), for example using a padding technique. The material is usually contacted with the phosphorus source in step a) such that the material is impregnated with the phosphorus source.

Within the present invention, the term "contacting" is used broadly and includes any physical contact of materials and compounds being sufficiently close to react or interact. In particular, the term "contacting", as used herein, is intended to include the application of liquid, preferably aqueous, compositions (e.g., a solvent, a solution, or a composition of a chemical) onto a material by any suitable means, such as dip coating, roll coating, gravure coating, spray coating, pouring, impregnation (e.g., padding), and the like.

Step a) can be conducted at a neutral to slightly acidic pH, preferably at a pH of 5.0 to 8.0, more preferably at a pH of 6.0 to 7.0. Step a) can be conducted at ambient temperature, preferably at 20°C to 40°C.
The material obtained in step a) is furnished with the phosphorus source.

In one embodiment, the material furnished with the phosphorus source may be subjected to at least one heat treatment step prior to being subjected to step b). Such a heat treatment step can be designed as drying step and/or curing step. In general, all techniques for heat treatments of a material known by a skilled person can be used, e.g. discontinuous curing on a hotflue or stenter box.

The nitrogen source used in step b) preferably comprises reactive functional groups, such as isocyanates, epoxides, chlorohydrin, azetidinium or any triazin-based reactive groups. In a preferred embodiment, the nitrogen source is selected from polymeric compounds, preferably comprising the reactive functional groups as mentioned. In a preferred embodiment, the nitrogen source is selected from cationic polymeric compounds, preferably comprising the above-mentioned reactive functional groups. A suitable nitrogen source is for example sold under the tradename Pekoflam^{®} SYN by Archroma.

In one preferred embodiment, more than one nitrogen source is used, in particular at least two or more nitrogen sources.

Techniques suitable for carrying out the rinsing procedure of step b) are known in the art.

As used herein, the term "rinsing" refers to a process, in which a particulate matter, a fluid or a dissolvable substance is at least partially removed from a material by dissolving in, and/or displacing with, a rinsing solution. Furthermore, the term "rinsing" is intended to refer to a process in which a material surface is contacted by a rinsing solution for the purpose of cleaning and/or converting the surface from one form to another and/or treating the surface to attain certain desirable properties. Preferred methods for conducting a "rinsing" step, process or procedure include partially or fully immersing the substrate in a rinsing solution with or without mechanical agitation, or spraying or a coating composition or solution onto the material surface.

Within the context of the present invention, the term "rinsing" is different from and does not include the term "impregnation". The term "impregnation", within the meaning of the present invention, refers to the forced penetration of a solution or a composition into a porous structure, such as a web or fiber matrix, of a material and further to the distribution of the solution, preferably in a substantially uniform way, into and through the interstices of the material. Technically, impregnation is achieved by forcing a liquid substance or a solution into a porous material, such as a porous web or a fiber matrix, by a suitable impregnation technique like padding. In contrast, the term "rinsing", as used herein, does not involve (actively) forcing a liquid substance or a solution into and through the interstices of a material by an impregnation technique like padding, but bringing a rinsing solution in contact with a material surface without applying any particular force, e.g. by dipping, immersion, coating and spraying.

Preferably, the "rinsing step" of step b) of the method according to the present invention is conducted by dipping or immersing the material obtained in step a) in an aqueous rinsing solution containing a nitrogen source, preferably a polymeric nitrogen source, more preferably a cationic polymeric nitrogen source.

The rinsing procedure can be subdivided into different rinsing steps which are conducted one after the other. The rinsing steps may differ from each other by certain conditions, e.g. temperature, pH, chemicals and the like.

The rinsing procedure may comprise a rinsing step at a temperature of at least 20°C, preferably from 20°C up to 90°C, preferably of at least 40°C to 80°C, preferably of at least 70°C to 80°C and/or at neutral or acidic pH, preferably at a pH of below 8.0, preferably at a pH of below 7.0, preferably at a pH of below 6.0, preferably at a pH of below 5.0, preferably at a pH of below 4.0, preferably at a pH of below 3.0, preferably at a pH of below 2.0, preferably at a pH of 2.0 to 5.0, preferably at a pH of 2.0 to 4.0. The material provided with the phosphorus source can be rinsed in the rinsing procedure only with water and/or the nitrogen source.

In a preferred embodiment, the material equipped with the phosphorus source is subjected to a rinsing step at elevated temperature, preferably at a temperature of at least 20°C, more preferably 20°C up to 90°C, particularly preferably of at least 40°C to 80°C, most preferably of at least 70°C to 80°C. Preferably, the material is rinsed only with water in this rinsing step, which has the advantage to remove byproducts or excess phosphorus source which are not fixed on the material. After having passed this first rinsing step, the material is subjected to a second rinsing step, wherein the second rinsing step differs from the first one in that, that the material is contacted in the second rinsing step with the nitrogen source. The contacting of the material with the nitrogen source can be conducted by dipping, spraying, coating or other suitable techniques. The temperature used in the second rinsing step can be equal, lower, or higher than the temperature used in the first rinsing step. Preferably, an acidic pH is used in the second rinsing step. Preferably a pH of below 8.0, preferably a pH of below 7.0, preferably a pH of below 6.0, preferably a pH of below 5.0, preferably a pH of below 4.0, preferably a pH of below 3.0, preferably a pH of below, preferably a pH of 2.0 to 5.0, preferably a pH of 2.0 to 4.0 is used in the second rinsing step.

In one embodiment, the rinsing step in which the material is contacted with the nitrogen source lasts at least 30 sec up to 2 minutes.

After having been subjected to step b) the material is in addition to the phosphorus source, provided with the nitrogen source. Preferably, the nitrogen load of the material after step b) is at least 1 wt%, preferably at least 5 wt %, more preferably at least 7 wt%, particularly preferable at least 10 wt%, most preferable between 1 to 10 wt%. However, the material has at the same time a soft grip. Further, the material has an LOI (LOI = limited oxygen index) of preferably up to 30, preferably up to 40, preferably up to 45, preferably up to 50, or most preferably even higher. Preferably, the material consists of:
- pure cotton fiber based fabrics of sufficient weight and structural density that can achieve LOI of 35 to 50 after having been subjected to step b);
- cotton rich blends with aliphatic polyamide that can achieve LOI of 30 to 40 after having been subjected to step b);
- blends with polyester that can achieve LOI of 25 to 35 after having been subjected to step b);
- as well as blends with aromatic polyamides can achieve indices of 30 to 60 after having been subjected to step b).

Further, the material, after having been treated with the method according to the invention, has an LOI of at least 25, preferably at least 28, preferably at least 30, preferably at least 32, even after having been subjected to industrial washes at 75°C according to ISO 15797, in particular after having been subjected to at least 25, preferably to at least 50, even more preferred to at least 75, and most preferred to at least 100 industrial washes at 75°C according to ISO 15797.

The material obtained in step b) may be subjected to at least one further processing step, wherein the further processing step is selected from:
(1) treating the material obtained in step b) with a nitrogen source, preferably polymeric nitrogen source, further preferably a cationic polymeric nitrogen source, wherein the nitrogen source may be the same or different from the nitrogen source used in step b). The treatment can be conducted as e.g. padding process, wherein the material is further impregnated with a nitrogen source;
(2) a heat treatment, preferably a drying step and/or a hot steam treatment, preferably at a temperature of 90°C to 170°C and/or a curing step, preferably at a temperature of 130°C to 160°C;
(3) a batch process where the treated material obtained in step b) is kept in wet stage for at least 1 min up to 24 hours, said batch process being preferably performed prior to the heat treatment of (2),
(4) an alkaline neutralization step, preferably at a pH of 11.0 to 14.0;
(5) or a combination of one or more of the mentioned processing steps.

Finally, in one embodiment, the material can be subjected to another rinsing procedure in order to remove further by-products or excess nitrogen source. Preferably, such a rinsing procedure is conducted at neutral pH and at room temperature.

### EXAMPLES

### Example 1

Padding of a cotton substrate of preferably having a weight of 120 to 450 gsm at room temperature with a reactive inorganic phosphonate at neutral pH, followed by subsequent drying and discontinuous curing on a hotflue or stenter box. An intermediate rinse is done at to 20°C to 40°C, with a subsequent rinsing passage where 1-10 g/l of a polymeric nitrogen source is applied at acidic pH. Re-drying is done again before the second padding is done with a polymeric nitrogen source at neutral to weakly alkaline pH, which requires drying and mild curing to achieve improving wash durability of the effects. Non-fixated polymeric nitrogen source has to be removed in a second neutral rinse process at room temperature with final drying at 110°C to 140°C.

### Example 2

Padding of a cotton substrate of preferably having a weight of 120 to 450 gsm at room temperature with a reactive inorganic phosphonate at neutral pH, followed by subsequent drying and discontinuous curing on a hotflue or stenter box. An intermediate rinse is done at 40°C to 90°C, preferably 50°C to 80°C, and most preferably 70 to 80°C, with a subsequent rinsing passage where 10-120 g/l of a polymeric nitrogen source is applied at acidic pH, preferably pH 2.0 to 5.0, more preferably 3.0 to 4.0,. Re-drying is done again before the second padding is done with a 50 to 150 g/l of a polymeric nitrogen source at neutral to weakly alkaline pH, which requires drying and mild curing to achieve improving wash durability of the effects. Non-fixated polymeric nitrogen source has to be removed in a second neutral rinse process at room temperature with final drying at 110°C to 140°C.

### Example 3

Padding of a cotton substrate of preferably having a weight of 120 to 450 gsm at room temperature with a reactive inorganic phosphonate at neutral pH, followed by subsequent drying and discontinuous curing on a hotflue or stenter box. An intermediate rinse is done at 40°C to 90°C, preferably 50°C to 80°C, and most preferably 70°C to 80°C, with a subsequent rinsing passage where 10-120 g/l, preferably 50 to 100 g/l of a polymeric nitrogen source is applied at acidic pH, preferably pH 2.0 to 5.0, more preferably 3.0 to 4.0, with an in-situ neutralization following by addition of an alkaline at pH 11.0 to 14.0 before re-drying is done at 110°C to 140°C with a final curing at 140°C to 160°C.

### Example 4

Padding of a cotton substrate of preferably having a weight of 120 to 450 gsm at room temperature with a reactive inorganic phosphonate at neutral pH, followed by subsequent drying and discontinuous curing on a hotflue or stenter box. An intermediate rinse is done at 40°C to 90°C, preferably 50°C to 80°C, and most preferably 70°C to 80°C, with a subsequent rinsing passage where 10-120 g/l, preferably 50 to 100 g/l of a polymeric nitrogen source is applied at acidic pH, preferably pH 2.0 to 5.0, more preferably 3.0 to 4.0. Re-drying is done at 110°C to 140°C with curing at 140°C to 160°C.

## Claims

1. A method of treating a material comprising the following steps:
a) contacting a material with at least one phosphorus source,
b) subjecting the material obtained in step a) to a rinsing procedure, wherein the rinsing procedure comprises at least one rinsing step in which said material obtained in step a) is contacted with a nitrogen source, preferably a polymeric nitrogen source, more preferably a cationic polymeric nitrogen source.

2. The method according to claim 1, wherein the at least one phosphorus source is an inorganic phosphorus salt, in particular an inorganic phosphonate capable of reacting with the material, preferably cotton.

3. The method according to claim 1 or 2, wherein step a) is conducted at a pH of 5.0 to 8.0, preferably at a pH of 6.0 to 7.0, and/or wherein step a) is preferably conducted at ambient temperature, preferably at 20°C to 40°C.

4. The method according to any one of the preceding claims, wherein, prior to being subjected to step b), the material obtained in step a) is subjected to at least one heat treatment step, preferably at least one drying and/or curing step.

5. The method according to any one of the preceding claims, wherein the at least one rinsing step of the rinsing procedure of step b) is conducted at a temperature of between 20°C and 90°C, preferably of between 40°C and 80°C, more preferably of between 70°C and 80°C.

6. The method according to any one of the preceding claims, wherein the material after having been subjected to the rinsing procedure of step b) has a load of nitrogen of 1 to 10 wt%.

7. The method according to any one of the preceding claims, wherein the at least one rinsing step is conducted at a pH below 8.0, preferably at a pH of 2.0 to 5.0.

8. The method according to any one of the preceding claims, wherein the material obtained in step b) is subjected to at least one further processing step, selected from the group consisting of:
(1) treating the material obtained in step b) with a nitrogen source, preferably a polymeric nitrogen source, further preferably a cationic polymeric nitrogen source, wherein the nitrogen source may be the same or different to the nitrogen source used in step b);
(2) a heat treatment, preferably a drying step and/or a hot steam treatment, preferably at a temperature of 90°C to 170°C and/or a curing step, preferably at a temperature of 130°C to 160°C;
(3) a batch process where the material obtained in step b) is kept in wet stage for 1 min up to 24 hours, said batch process being preferably performed prior to a the heat treatment of (2);
(4) an alkaline neutralization step, preferably at a pH of 11.0 to 14.0.

9. The method according to any of the preceding claims, wherein the polymeric nitrogen source comprises reactive groups, preferably isocyanates-, epoxides-, chlorohydrin- , azetidinium-, or triazin based groups.

10. The method according to any one of the preceding claims, wherein step a and/or step b) is/are carried out as part of a process selected from the group comprising wet-in-wet process, dry-in-wet-process, continuous process, discontinuous process, process using a low liquor ratio, process using a high liquor ratio, and combinations thereof.

11. The method according to any one of the preceding claims, wherein the nitrogen source of step b) is applied to the material by spraying or coating.

12. The method according to any one of the preceding claims, wherein the material is selected from a material which has already been subjected to the method according to claim 1 or to another method at least once comprising at least contacting the material with a phosphorus source.

13. The method according to any one of the preceding claims, wherein the material to be treated comprises fibers, wherein the fibers consist essentially of or consist of cotton, preferably comprises at least 70%, more preferably 80%, further preferably 90%, still more preferably 100% cotton fibres, and wherein the residual non-cotton fibers are selected from wool, regenerated cellulose, or any other natural or synthetic fibers.

14. A material obtainable according to the method of any one of the claims 1 to 13.

15. Use of a material according to claim 14 for the manufacture of flame retardant industrial work-wear fabrics, protective underwear, adult and children nightwear, domestic and contract furnishings, mattress tickings and barrier fabrics, hospital and prison beddings, office and hotel furniture and curtains, table cloth and cooking aprons.
